# DEMANDE DE BREVET EUROPEEN

(11) **EP 2 320 478 A1**
(43) Date de publication de la demande: **11.05.2011**
(21) Numéro de dépôt: 10354068.8
(22) Date de dépôt: 26.10.2010
(51) Int. Cl.: H01L 31/042

(54) **Module de pose pour panneaux solaires**

(30) Priorité: 03.11.2009 FR 0905268
(71) Demandeur: Sauvageon, Denis, 73100 LeGrand Port d'Aix Les Bains (FR)
(72) Inventeur: Sauvageon, Denis, 73100 Le Grand Port d'Aix Les Bains (FR)
(74) Mandataire: de Jong, Jean Jacques

(57) **Abrégé**

L'invention concerne un module de pose de panneaux rectangulaires sur un plan incliné, comprenant une partie centrale (14) ayant un côté amont (10) et un côté aval (12) ; deux rampes (16) sensiblement parallèles encadrant la partie centrale (14) entre les côtés amont et aval, le sommet de chaque rampe étant situé du côté aval ; un crochet (18) au sommet de chaque rampe, configuré pour recevoir le bord aval d'un panneau posé sur le module et à maintenir le panneau par gravité ; et une rainure (20) ouverte vers l'aval, située entre chaque crochet (18) et le plan de la partie centrale (14), et configurée pour recevoir le bord amont d'un panneau placé en aval du module.

## Description

### Domaine technique de l'invention

L'invention est relative à l'assemblage de panneaux solaires photovoltaïques sur un toit, et plus particulièrement à un assemblage où des tuiles sont intégralement remplacées par des panneaux solaires.

### État de la technique

Aujourd'hui, on cherche à intégrer les panneaux solaires photovoltaïques à la structure du toit, c'est-à-dire à remplacer les tuiles par des panneaux solaires. Les panneaux doivent ainsi pouvoir se monter sur des charpentes de toit traditionnelles.

Une manière classique pour réaliser un tel assemblage est de disposer sur la charpente une sous-couche imperméable, et de monter les panneaux solaires par dessus. Les panneaux sont souvent montés individuellement au moyen de consoles que l'on fixe sur la charpente à travers la sous-couche imperméable.

Il existe des sous-couches dédiées, munies de structures permettant de fixer directement les consoles, ce qui évite de chercher des éléments de charpente par tâtonnement.

Malgré cela, la fixation de chaque panneau reste une opération individuelle, longue et fastidieuse. Le démontage d'un panneau pour des besoins de maintenance ou de remplacement s'avère également fastidieux.

### Résumé de l'invention

On a donc besoin de prévoir un système d'assemblage de panneaux solaires qui soit rapide à mettre en oeuvre.

Pour tendre à satisfaire ce besoin, on prévoit module de pose de panneaux rectangulaires sur un plan incliné, comprenant une partie centrale ayant un côté amont et un côté aval ; deux rampes sensiblement parallèles encadrant la partie centrale entre les côtés amont et aval, le sommet de chaque rampe étant situé du côté aval ; un crochet au sommet de chaque rampe, configuré pour recevoir le bord aval d'un panneau posé sur le module et à maintenir le panneau par gravité ; et une rainure ouverte vers l'aval, située entre chaque crochet et le plan de la partie centrale, et configurée pour recevoir le bord amont d'un panneau placé en aval du module.

Selon un mode de réalisation, la partie centrale forme une goulotte configurée pour canaliser un écoulement d'eau entre les côtés amont et aval. La distance entre les côtés amont et aval du module est de l'ordre de la longueur des panneaux. Le côté aval est configuré de manière à épouser le côté amont d'un module similaire placé en aval. Il en résulte que les modules disposés sur une ligne de pente forment une goulotte continue.

Dans un assemblage de panneaux rectangulaires similaires sur un plan incliné, des panneaux alignés sur une ligne de niveau sont disposés bord à bord, et des panneaux alignés sur une ligne de pente sont disposés de manière qu'un panneau amont recouvre partiellement un panneau aval. L'assemblage comprend un module du type susmentionné, placé sous chaque intervalle entre deux panneaux disposés bord à bord.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- les figures 1A à 1C représentent respectivement des vues de côté, de dessus, et en perspective d'un mode de réalisation de module destiné à permettre un assemblage rapide de panneaux solaires ; et
- les figures 2A et 2B représentent en vue de côté et de dessus une mise en oeuvre de modules selon les figures 1A à 1C.

### Description d'un mode de réalisation préféré de l'invention

Pour faciliter l'assemblage de panneaux solaires intégrés à la structure d'un toit, on prévoit que les panneaux solaires peuvent être montés par simple emboîtement, comme on monterait des tuiles classiques.

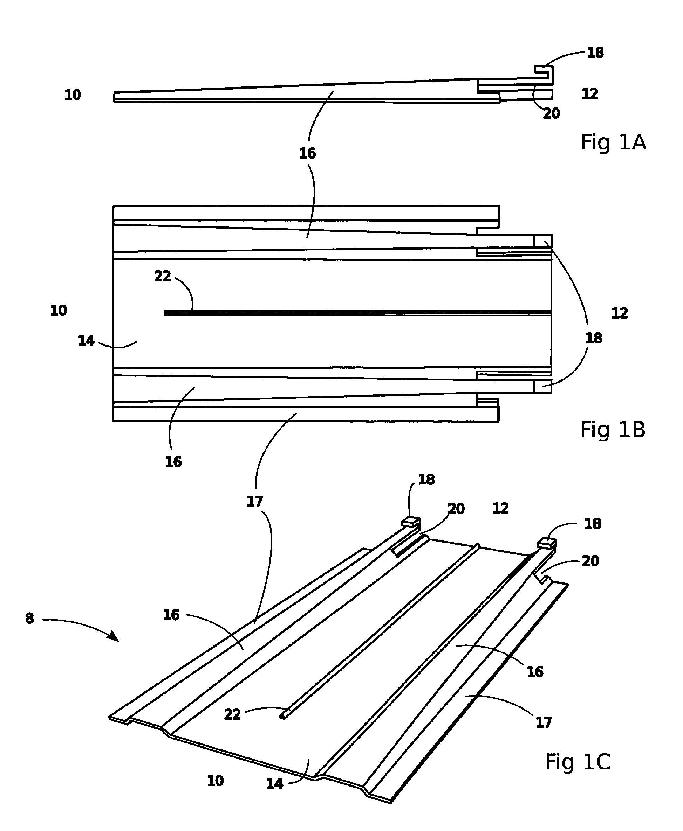

Les figures 1A à 1C, que l'on décrira en même temps, représentent respectivement des vues de côté, de dessus, et en perspective d'un mode de réalisation de module d'assemblage 8 destiné à satisfaire ce besoin.

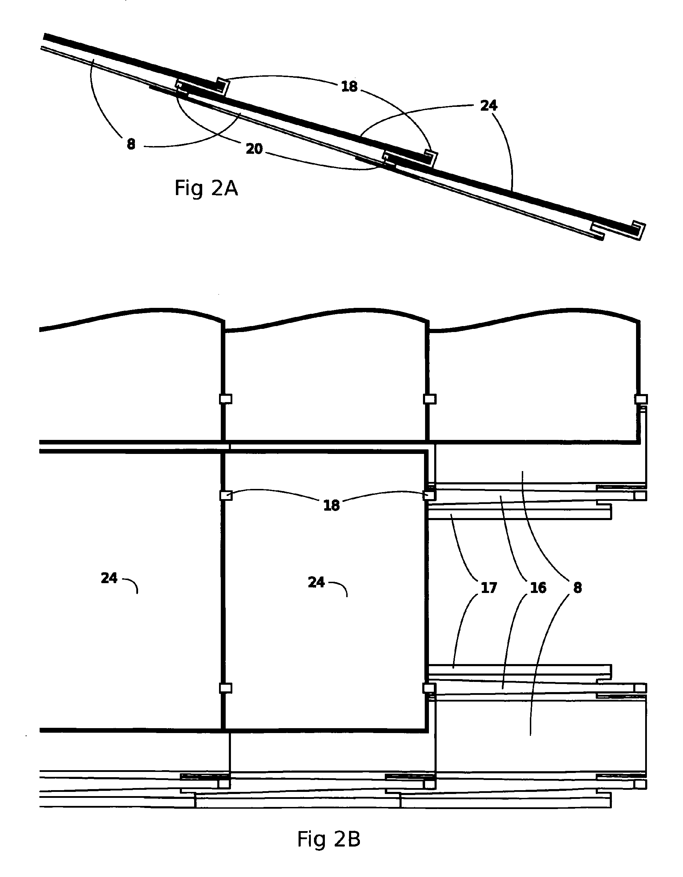

Le module est prévu pour être placé sous l'intervalle entre deux panneaux disposés bord à bord horizontalement. On abordera en détail la mise en oeuvre des modules à l'aide des figures 2A et 2B, décrites ultérieurement.

Le module est de forme générale plate. Il comporte un côté amont 10 et un côté aval 12, reliés par une partie centrale 14 plane. La partie centrale 14 est destinée à pouvoir servir de goulotte pour évacuer l'eau infiltrée entre les panneaux adjacents.

Le module est muni de deux rampes 16 qui s'élèvent par rapport au plan de la goulotte 14 en allant du côté amont 10 vers le côté aval 12. En d'autres termes, les sommets des rampes se trouvent du côté aval 12. Ces deux rampes sont sensiblement parallèles, s'étendent de préférence sur toute la longueur du module, et leurs parois latérales internes forment les parois de la goulotte 14. Par ailleurs, les rampes démarrent d'une hauteur non nulle du côté amont 10, afin d'offrir une paroi à la goulotte sur toute la longueur du module.

Les parois latérales externes des rampes se terminent sur des ailes latérales 17 dans le même plan que la goulotte. Ces ailes serviront à fixer le module sur une charpente de toit, par exemple à l'aide de clous ou vis traversant ces ailes.

Le sommet de chaque rampe, du côté aval 12, comporte un crochet 18 saillant vers le haut et, de préférence, recourbé vers l'amont. Comme on le verra plus en détail ultérieurement, ce crochet est destiné à recevoir le bord aval d'un panneau solaire, et à maintenir le panneau par gravité.

Les parois latérales des rampes, du côté aval, définissent, entre les crochets 18 et le plan de la goulotte 14, une rainure 20 ouverte vers l'aval. Ces rainures sont destinées à recevoir le bord amont d'un panneau solaire placé en aval.

Dans une configuration préférentielle, on prévoit en outre qu'un module, par son côté aval, recouvre le côté amont d'un autre module placé à l'aval, pour former une goulotte continue pouvant évacuer l'eau sans fuite entre les modules.

Pour assurer une évacuation d'eau dans de bonnes conditions, il est préférable que le côté aval du module épouse intimement le côté amont du module suivant. Ainsi, comme cela est représenté à titre d'exemple, l'épaisseur du module, dans une section perpendiculaire au plan de la goulotte, est sensiblement constante, et les rampes sont formées sur des prismes. Cette forme permet en outre de faciliter la fabrication du module par moulage ou par estampage.

La goulotte 14 peut comporter une nervure centrale 22 partant du bord aval et s'arrêtant en retrait par rapport au bord amont. Ce retrait pourra servir de repère pour placer un module en amont avec un chevauchement prédéfini. La nervure peut également servir à faciliter la séparation du module en deux demi-modules en limite d'assemblage, et à servir de paroi pour contenir l'eau d'écoulement dans un demi-module.

Les figures 2A et 2B représentent un exemple d'assemblage de panneaux solaires réalisable avec des modules 8 du type des figures 1A à 1C. La figure 2A représente une vue en coupe de côté d'une toiture réalisée à partir de panneaux solaires et des modules, et la figure 2B représente une vue de dessus de la toiture, certains panneaux n'étant pas représentés pour révéler la structure en dessous.

Les modules sont de préférence utilisés dans la configuration particulière représentée. Les panneaux 24 sont alignés selon deux directions perpendiculaires, l'une étant une ligne de niveau, et l'autre une ligne de pente. Les panneaux alignés selon une ligne de niveau, ou horizontalement, sont disposés bord à bord, sans forcément se toucher. Les panneaux alignés selon une ligne de pente sont disposés de manière qu'un panneau amont recouvre partiellement le panneau aval suivant.

Ainsi, en cas de précipitations, l'eau s'écoule d'un panneau amont vers un panneau aval sans s'infiltrer entre les panneaux.

Par contre, de l'eau s'infiltrera dans l'intervalle séparant deux panneaux horizontaux adjacents. C'est sous cet intervalle que sont placés les modules d'assemblage 8, comme cela est visible à la figure 2B.

Si l'on souhaite que les modules 8 servent à évacuer l'eau et participent à assurer l'étanchéité de l'assemblage, ces modules 8 sont, comme les panneaux, disposés de manière qu'un module amont recouvre partiellement le module aval suivant. La longueur des modules est alors du même ordre que la longueur des panneaux. Pour être plus précis, la longueur d'un module est supérieure à la longueur de la partie non recouverte d'un panneau. Une certaine marge de variation de la longueur des panneaux pourra être compensée par la profondeur des rainures 20 et le degré de chevauchement des modules.

Les modules ainsi disposés le long d'une ligne de pente forment une goulotte continue qui récupère l'eau s'infiltrant entre deux séries de panneaux adjacents.

L'étanchéité de l'ensemble est donc assurée par le montage à recouvrement des panneaux le long des lignes de pente, et par le montage à recouvrement des modules entre deux séries de panneaux.

Les modules 8 servent en outre à fixer les panneaux et à permettre leur montage de manière aisée.

Puisqu'un module comporte des parties symétriques servant à deux panneaux adjacents, on désignera ci-après par demi-module la partie d'un module dédiée à un seul panneau.

Comme cela est représenté, en position montée des panneaux 24, le bord aval de chaque panneau est pris dans deux crochets 18 de deux demi-modules 8 distincts, situés sous les bords latéraux du panneau (on désigne par bords « latéraux » d'un panneau les bords autres que les bords amont et aval du panneau). Par ailleurs, le bord amont du panneau est inséré dans deux rainures 20 de deux demi-modules amont distincts. La profondeur d'insertion dans les rainures 20 détermine le degré de chevauchement des panneaux.

Comme on peut le voir à la figure 2A, il subsiste un jeu entre le bord amont des panneaux 24 et le fond des rainures 20. Ce jeu est destiné à faciliter le montage des panneaux.

La réalisation de l'assemblage se fait, par exemple, selon les étapes suivantes. On commence par fixer les modules 8 directement sur la toiture à la place des tuiles, selon la configuration visible à la figure 2B, c'est-à-dire en séries de modules alignés selon des lignes de pente. L'écart entre les séries correspond à la largeur des panneaux. Les modules d'une série sont disposés, de préférence, comme on l'a précédemment indiqué, de manière qu'un module recouvre partiellement le module aval suivant.

Chaque module pourra être fixé à des liteaux prévus pour monter des tuiles de manière traditionnelle. Les éléments de fixation (par exemple des clous) seront de préférence insérés dans les ailes 17 qui pourront être pré-percées. On préfère éviter le perçage de la partie formant goulotte 14, afin de ne pas affecter l'étanchéité de la goulotte.

Une fois que les modules sont fixés, on peut placer les panneaux. Contrairement au placement de tuiles traditionnelles, qui s'imbriquent les unes dans les autres selon un ordre prédéfini, chaque panneau peut ici être placé indépendamment des autres, en commençant par le bas, par le haut, ou par toute autre position à la convenance de l'utilisateur. On commence par glisser le bord amont du panneau en butée dans les rainures 20 de deux demi-modules amont, et on abaisse le panneau pour le plaquer contre les rampes 16 des deux demi-modules qui lui sont associés. En rattrapant le jeu au fond des rainures 20, le bord aval du panneau parvient à franchir les becs des crochets 18. En relâchant le panneau, il glisse par gravité sur les rampes 16, et son bord aval vient en butée au fond des crochets 18, où il est maintenu par les crochets.

Un panneau ainsi monté est maintenu par gravité sur les rampes 16 de deux demi-modules 8 et par les crochets de ces demi-modules. Il est inutile de prévoir d'autres éléments de maintien.

On souhaite généralement qu'une personne puisse marcher sur le toit, donc sur les panneaux 24, pour effectuer des travaux d'entretien. Ainsi, l'assemblage de panneaux doit pouvoir résister au piétinement. Les panneaux sont généralement prévus pour cela, mais il convient de placer des supports de manière bien répartie. Les rampes 16 font office de supports. Elles sont placées de manière qu'un panneau résiste au poids d'une personne appliqué sur les zones les plus contraignantes du panneau, à savoir sur un bord latéral du panneau ou au centre du panneau. Pour cela, l'écart entre les rampes 16 d'un module est choisi entre 25 et 50 % de la largeur d'un panneau. Dans l'exemple représenté, l'écart est de l'ordre de 33 %.

De nombreuses variantes et modifications des modes de réalisation décrits ici apparaîtront à l'homme du métier. Bien que l'on ait décrit l'utilisation d'un seul module disposé entre deux panneaux, assurant à la fois la fonction de goulotte continue d'évacuation d'eau et le maintien des panneaux, on peut également envisager deux types de modules : un premier type assurant le maintien, disposé aux coins du panneau, et des modules intermédiaires pour assurer la continuité de la goulotte et des rampes entre les modules de maintien. Cette solution permettrait de prévoir un seul jeu de modules pour une gamme de longueurs de panneau.

Dans une autre variante, si on prévoit une sous-couche d'étanchéité, il est inutile que les modules se chevauchent. On peut alors prévoir des modules plus compacts que l'on dispose aux coins des panneaux. On préserve l'intérêt du montage rapide.

## Revendications

1. Module de pose de panneaux rectangulaires sur un plan incliné, comprenant :
• une partie centrale (14) ayant un côté amont (10) et un côté aval (12) ;
• deux rampes (16) sensiblement parallèles encadrant la partie centrale (14) entre les côtés amont et aval, le sommet de chaque rampe étant situé du côté aval ;
• un crochet (18) au sommet de chaque rampe, configuré pour recevoir le bord aval d'un panneau posé sur le module et à maintenir le panneau par gravité ; et
• une rainure (20) ouverte vers l'aval, située entre chaque crochet (18) et le plan de la partie centrale (14), et configurée pour recevoir le bord amont d'un panneau placé en aval du module.

2. Module selon la revendication 1, dans lequel :
• la partie centrale forme une goulotte (14) configurée pour canaliser un écoulement d'eau entre les côtés amont (10) et aval (12),
• la distance entre les côtés amont et aval du module est de l'ordre de la longueur des panneaux, et
• le côté aval est configuré de manière à épouser le côté amont d'un module similaire placé en aval, d'où il résulte que les modules disposés sur une ligne de pente forment une goulotte continue.

3. Module selon la revendication 2, ayant une épaisseur sensiblement constante dans une section perpendiculaire au plan de la goulotte (14), les rampes (16) étant formées sur des prismes.

4. Module selon la revendication 2, dans lequel les rampes (16) démarrent d'une hauteur non nulle du côté amont (10).

5. Module selon la revendication 1, dans lequel l'écart entre les rampes est compris entre 25% et 50% de la largeur des panneaux.

6. Assemblage de panneaux rectangulaires similaires (24) sur un plan incliné, dans lequel des panneaux alignés sur une ligne de niveau sont disposés bord à bord, et des panneaux alignés sur une ligne de pente sont disposés de manière qu'un panneau amont recouvre partiellement un panneau aval, **caractérisé en ce qu**'il comprend un module (8) selon la revendication 1 placé sous chaque intervalle entre deux panneaux disposés bord à bord.

7. Assemblage selon la revendication 8, dans lequel les modules (8) sont disposés de manière qu'un module amont recouvre partiellement un module aval.
